(19) **Europäisches Patentamt / European Patent Office / Office européen des brevets**

(11) **EP 1 563 317 B1**

(12) # FASCICULE DE BREVET EUROPEEN

(45) Date de publication et mention de la délivrance du brevet:
**07.06.2017 Bulletin 2017/23**

(21) Numéro de dépôt: **03789468.0**

(22) Date de dépôt: **21.11.2003**

(51) Int Cl.:
*G01S 7/28* (2006.01)          *H04K 3/00* (2006.01)
*G01S 7/40* (2006.01)

(86) Numéro de dépôt international:
**PCT/FR2003/003451**

(87) Numéro de publication internationale:
**WO 2004/048996 (10.06.2004 Gazette 2004/24)**

(54) **PROCEDE DE VERIFICATION DE L'EFFICACITE DE L'ANTIBROUILLAGE D'UN SYSTEME DE COMMUNICATIONS**

VERFAHREN ZUR ÜBERPRÜFUNG DER ENTSTÖRUNGSEFFEKTIVITÄT EINES KOMMUNIKATIONSSYSTEMS

METHOD FOR VERIFYING ANTI-SCRAMBLING EFFICIENCY OF A COMMUNICATION SYSTEM

(84) Etats contractants désignés:
**AT BE BG CH CY CZ DE DK EE ES FI FR GB GR HU IE IT LI LU MC NL PT RO SE SI SK TR**

(30) Priorité: **22.11.2002 FR 0214685**

(43) Date de publication de la demande:
**17.08.2005 Bulletin 2005/33**

(73) Titulaire: **Thales**
**92400 Courbevoie (FR)**

(72) Inventeurs:
- **CHEVALIER, Pascal,**
  **Thales Intellectual Property**
  **94117 Arcueil Cedex (FR)**
- **COL, Béatrice,**
  **Thales Intellectual Property**
  **94117 Arcueil Cedex (FR)**
- **LASNIER, Frédérique,**
  **Thales Intellectual Property**
  **94117 Arcueil Cedex (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 6 157 817      US-B1- 6 236 363**

- **MATSUMOTO Y ET AL: "INTERFERENCE SUPPRESSION BY ADAPTIVE BEAMFORMING OF SATELLITE-BORNEPHASED-ARRAY ANTENNAS" ELECTRONICS & COMMUNICATIONS IN JAPAN, PART I - COMMUNICATIONS, SCRIPTA TECHNICA. NEW YORK, US, vol. 81, no. 11, 1 novembre 1998 (1998-11-01), pages 58-66, XP000782521 ISSN: 8756-6621**

**Description**

L'invention concerne un procédé de vérification de l'efficacité de l'antibrouillage par traitement d'antenne, d'une ou de plusieurs communications spatiales, embarqué sur un satellite géostationnaire, ainsi que sa mise en oeuvre à partir du sol.

L'invention trouve son application dans le domaine de l'antibrouillage des télécommunications spatiales et constitue un outil d'aide à l'optimisation de la planification des débits des liaisons d'un théâtre d'opérations en fonction de la situation de brouillage.

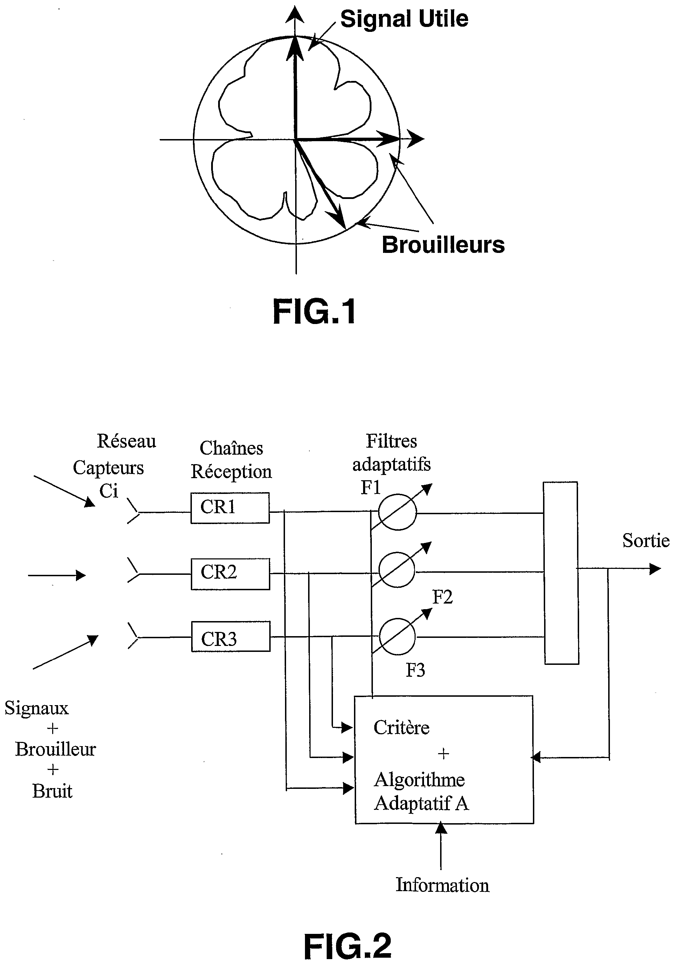

L'antibrouillage par traitement d'antenne constitue actuellement la manière la plus efficace de protéger une ou plusieurs communications, spatiales ou radios, vis-à-vis de brouilleurs hostiles. L'antibrouillage par traitement d'antenne consiste à mettre en oeuvre une antenne dite adaptative à la réception, dont la principale propriété est d'adapter en temps réel son diagramme de rayonnement aux signaux reçus, en construisant des trous de diagramme dans la direction des brouilleurs tout en préservant un gain suffisant dans la direction de la ou des liaisons à protéger comme l'illustre la figure 1. Ce résultat peut-être obtenu à partir d'une information minimale sur les liaisons à protéger telle que la connaissance de la position des émetteurs, du théâtre d'opération ou de séquences d'apprentissage véhiculées par les émetteurs, sans connaissance a priori sur les brouilleurs présents. Toutefois, dans certains cas, l'estimation a priori des positions des brouilleurs peut être avantageusement utilisée par l'antenne adaptative de manière à simplifier les traitements.

La figure 2 représente une antenne adaptative à structure purement spatiale. Elle est composée d'un réseau de capteurs Ci ou d'éléments rayonnants, d'un ensemble de chaînes de réception CRi, numériques ou analogiques, en aval des capteurs, d'un ensemble de filtres adaptatifs Fi à un coefficient complexe par capteur dont le rôle est de pondérer en phase et en amplitude les signaux issus des différents capteurs avant sommation et d'un algorithme adaptatif A dont le rôle est d'adapter en temps réel les coefficients des filtres adaptatifs de manière à optimiser un critère fonction de l'information disponible a priori sur les signaux d'intérêts et donc de l'application.

La mise en oeuvre de l'antenne adaptative peut se faire de manière analogique, numérique ou hybride. Dans le premier cas, les pondérations sont calculées et appliquées en analogique alors que dans le second cas elles sont calculées et appliquées en numérique. Dans le dernier cas, le jeu de pondérations complexes est calculé en numérique et recopié en analogique avant sommation.

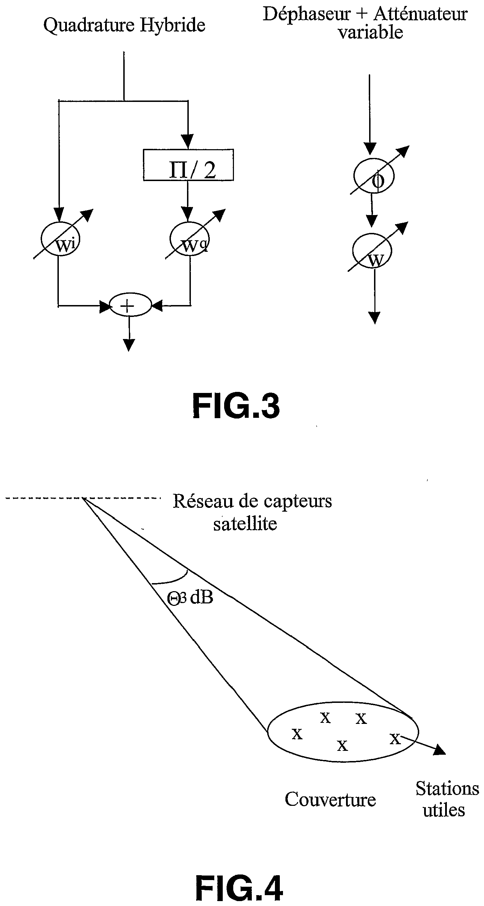

Pour une implantation numérique, les filtres adaptatifs sont des pondérations complexes alors que pour une implantation analogique ces filtres sont constitués par la mise en cascade d'un déphaseur et d'un atténuateur variable ou d'une quadrature hybride comme le montre la figure 3.

Dans le contexte des communications spatiales, en absence de brouilleurs, le jeu de pondérations synthétise une couverture (ou un spot) sur la terre, centrée en un point donné et ayant une certaine surface comme le montre la figure 4. En général la couverture est caractérisée en particulier par la largeur à 3 dB du faisceau formé par le jeu de pondérations. Selon la taille de cette largeur de lobe à 3 dB ou de la surface terrestre éclairée, on parle de couverture théâtre, régionale ou globale, cette dernière correspondant à l'ensemble de la terre. Les stations utiles sont déployées à l'intérieur de la couverture considérée pour une mission donnée et communiquent entre elles et/ou avec la métropole via le satellite.

Un brouillage issu d'une ou de plusieurs régions terrestres brouille les liaisons utiles montantes (de la terre vers un satellite) et le rôle de l'antenne adaptative est précisément d'antibrouiller les liaisons par création de trous de diagramme d'antenne dans la direction des brouilleurs, situés en dehors ou au sein de la couverture et captés par les lobes respectivement secondaires et principal de l'antenne.

Le document de Matsumoto Y et al, intitulé « Interference suppression by adaptive beamforming of satellite-borne phased array antennas » electronics and communications in Japan -Part I communications, scripta technica. New York, US, vol.81, n° 11, 1 novembre 1998, pages 58-66, XP 000782521 ISSN :8756-6621, divulgue une méthode et un système de formation de faisceau adaptatif pour une antenne satellite, permettant de supprimer les interférences présentes dans une liaison montante. Pour cela, le document de Matsumoto enseigne d'utiliser une antenne S-Band et de réduire l'influence de l'interférence dans le lien intersatellitaire dans la bande S.

L'invention concerne un procédé de vérification de l'efficacité de l'antibrouillage, par antenne adaptative, de la liaison montante d'une ou de plusieurs communications spatiales ainsi que sa mise en oeuvre à partir du sol.

L'invention concerne un procédé de vérification de l'antibrouillage dans un système de communications comportant plusieurs capteurs ou antennes adaptatives. Il est caractérisé en ce qu'il comporte au moins les étapes suivantes :

- estimer la puissance moyenne de la sortie du système de communication,
- estimer les puissances respectives Pu ou P'u, d'une station u, du bruit antenne Pa ou P'a, du bruit thermique PT, ou P'T,
- estimer au moins un des rapports suivants :

$$J_{tot}/S_{tot} \;=\; \left( \sum_{p=1}^{P} P_p \right) / \left( \sum_{u=1}^{U} P_u \right)$$

avec p = le brouilleur

$J_{tot}/S_{tot}$ correspondant à la somme des puissances des brouilleurs résiduels / somme des puissances des stations dans la bande de réception B.

$$J_{tot}/S_u \;=\; \left( \sum_{p=1}^{P} P_p \right) / P_u$$

$J_{tot}/S_u$ correspondant à la somme des puissances des brouilleurs résiduels / puissance de la station u dans la bande de réception B.

$$J_u/S_u \;=\; \left( \sum_{p=1}^{P} P_{pu} \right) / P_u$$

avec Ppu = puissance du brouilleur p dans la bande de réception Bu.

- comparer au moins un des trois rapports à une valeur seuil.

L'invention concerne aussi un système de vérification de l'antibrouillage dans un système de communications comportant plusieurs capteurs ou antennes adaptatives, et une station au sol et un dispositif de pilotage. Il est caractérisé en ce qu'il comporte au moins les éléments suivants : pour une vérification par canal, à partir du sol et pour une bande de réception B, un calculateur intégré dans le dispositif de pilotage et un calculateur embarqué, les deux calculateurs étant programmés pour exécuter les étapes du procédé selon l'invention :

- estimer les puissances respectives Pu ou P'u, d'une station u, du bruit antenne Pa ou P'a, du bruit thermique PT, ou P'T,
- estimer au moins un des rapports suivants :

$$J_{tot}/S_{tot} \;=\; \left( \sum_{p=1}^{P} P_p \right) / \left( \sum_{u=1}^{U} P_u \right)$$

avec p = le brouilleur,
correspondant à la somme des puissances des brouilleurs résiduels / somme des puissances des stations dans la bande de réception B.

$$J_{tot}/S_u \;=\; \left( \sum_{p=1}^{P} P_p \right) / P_u$$

correspondant à la somme des puissances des brouilleurs résiduels / puissance de la station u dans la bande de réception B.

Selon une autre variante de réalisation, l'invention concerne aussi un système de vérification de l'antibrouillage dans un système de communications comportant plusieurs capteurs ou antennes adaptatives, une station au sol et un dispositif de pilotage caractérisé en ce qu'il comporte au moins les éléments suivants :

Pour une Vérification par station, un calculateur embarqué et un calculateur au sol, les calculateurs étant programmés pour exécuter les étapes du procédé selon l'invention,

- estimer les puissances respectives Pu ou P'u, d'une station u, du bruit antenne Pa ou P'a, du bruit thermique PT, ou P'T,
- déterminer la quantité relative à la bande de station u en tenant compte des P brouilleurs :

$$J_u / S_u \;=\; (\; \sum_{p=1}^{P} \; \boldsymbol{P}_{pu} \;) /\; \boldsymbol{P}_u$$

avec Ppu la puissance du brouilleur p dans la bande de réception Bu.

L'invention s'applique par exemple dans des systèmes de communications spatiales.

Le procédé proposé permet à tout moment de savoir si l'antibrouillage appliqué est efficace ou non. Dans le cas où il ne l'est pas, l'information issue du procédé permet de modifier les caractéristiques de l'antibrouillage (choix du nombre et du type de voies auxiliaires dans le cas d'un traitement de type OLS (Opposition dans les Lobes Secondaires), paramétrisation alternative d'une présynthèse de zéros (PRS) lorsqu'une information a priori sur la position des brouilleurs est disponible) pour augmenter son efficacité.

D'autres caractéristiques et avantages de l'invention apparaîtront mieux à la lecture de la description donnée à titre illustratif et nullement limitatif annexée des figures qui représentent :

- La figure 1 un diagramme de rayonnement de l'antenne après antibrouillage,
- La figure 2 un schéma fonctionnel d'une antenne adaptative à structure spatiale,
- La figure 3 un filtre adaptatif purement spatial pour une implémentation analogique,
- La figure 4 la couverture délimitée par le faisceau associé au jeu de pondérations en absence de brouilleurs,
- La figure 5 une structure de l'antenne adaptative pour une mise en oeuvre numérique des filtres,
- La figure 6 une structure de l'antenne adaptative pour une mise en oeuvre analogique des filtres,
- La figure 7 un schéma fonctionnel du séquencement des opérations de mise en oeuvre du système de vérification de l'efficacité de l'antibrouillage.

Le procédé selon l'invention utilise notamment les informations, supposées disponibles a priori, sur la position et la Puissance Isotrope Rayonnée Equivalente (PIRE) émise par les stations utiles oeuvrant au sein de la couverture, encore appelées informations de théâtre. Il exploite en outre les caractéristiques de l'antenne active utilisée à bord du satellite et en particulier la connaissance des positions et des réponses des ER (Eléments Rayonnants) pour chaque direction de l'espace et chaque polarisation du champ incident, le jeu de pondérations utilisé pour l'antibrouillage, le gain et les températures de bruit équivalentes des chaînes de réception analogiques ou numériques en aval des capteurs et, pour une implantation analogique ou hybride du jeu de pondérations, celui de l'éventuelle chaîne de numérisation en sortie d'antenne.

Avant d'exposer le procédé selon l'invention quelques rappels concernant les signaux dans un système de communication antibrouillé sont donnés.

**A. Signaux en sortie d'un BFN (abrégé de Beamforming Network ou Réseau Formateur de faisceau) de communication antibrouillé**

Chacun des N capteurs Ci du réseau de la figure 2 est supposé recevoir la contribution de U sources utiles, provenant du théâtre d'opération, de P brouilleurs perturbant les communications et d'un bruit de fond. Tous ces signaux sont supposés être à bande étroite pour le réseau de capteurs.

**A1.** *Expression pour une mise en oeuvre numérique de l'antenne adaptative*

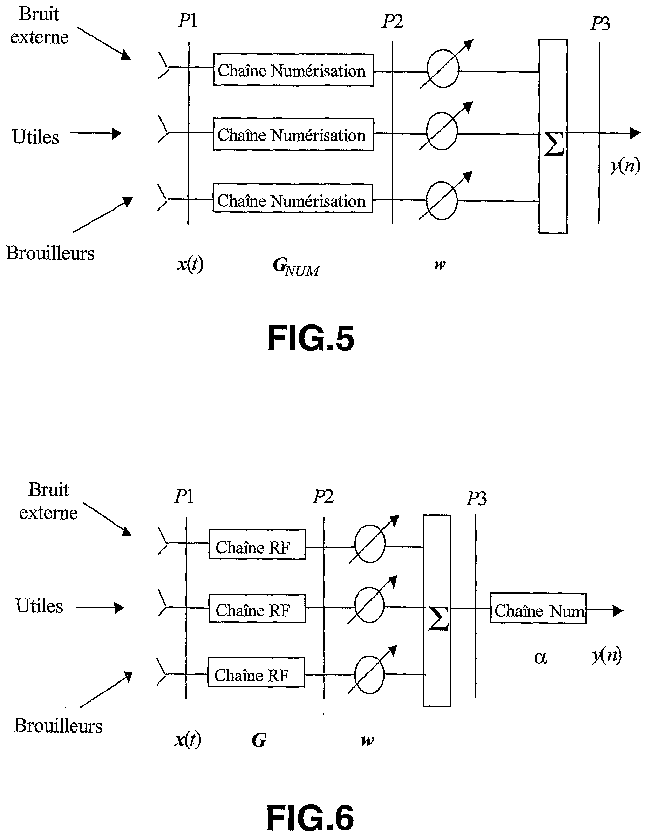

La figure 5 présente la structure de l'antenne adaptative dans le cas d'une mise en oeuvre numérique des filtres adaptatifs.

Les *N* capteurs du réseau correspondent soit à des ER, soit à des sous-réseaux préformés en analogique. Dans le contexte d'une implantation numérique, le vecteur, *x*(t), des enveloppes complexes des signaux ramenés au point P1 de la figure 5 s'écrit, à l'instant *t*

$$\boldsymbol{x}(t) \;=\; \sum_{u=1}^{U} s_u(t)\,\boldsymbol{S}_u \;+\; \sum_{p=1}^{P} j_p(t)\,\boldsymbol{J}_p \;+\; \boldsymbol{b}_a(t) \;+\; \boldsymbol{b}_T(t) \tag{1}$$

où $\boldsymbol{b}_a(t)$ est le vecteur bruit au point P1 provenant du réseau de capteurs ou antenne (bruit externe + bruit thermique des chaînes de réception RF), $\boldsymbol{b}_T(t)$ est le vecteur bruit thermique des chaînes de numérisation ramené en P1, $j_p(t)$ et $\boldsymbol{J}_p$ correspondent respectivement à l'enveloppe complexe et au vecteur directeur du brouilleur $p$, $s_u(t)$ et $\boldsymbol{S}_u$ correspondent respectivement à l'enveloppe complexe et au vecteur directeur de la station $u$.

Dans le cas général de capteurs quelconques, la composante $n$ du vecteur directeur $\boldsymbol{S}_u$ est donnée par

$$S_{un} \quad = \quad f_n(\boldsymbol{k}_u, \eta_u) \exp(-j\, \boldsymbol{k}_u\, \boldsymbol{r}_n) \tag{2}$$

où $\boldsymbol{k}_u$ et $\eta_u$ sont respectivement le vecteur d'onde et les paramètres de polarisation de la station $u$, $\boldsymbol{r}_n$ est le vecteur position du capteur $n$ et $f_n(\boldsymbol{k}_u, \eta_u)$ est la réponse complexe du capteur $n$ dans la direction $\boldsymbol{k}_u$ pour la polarisation $\eta_u$.

Sous les hypothèses précédentes, l'enveloppe complexe à l'instant $nT_e$, $y(n)$, de la sortie échantillonnée du BFN de communication antibrouillé associé au jeu de pondérations $\boldsymbol{w}$, s'écrit :

$$y(n) \;\overset{\triangle}{=}\; \boldsymbol{w}^{\dagger}\, G_{num}\; \boldsymbol{x}(n) \;=$$

$$\sum_{u=1}^{U} s_u(n)\, \boldsymbol{w}^{\dagger}\, G_{num}\, \boldsymbol{S}_u \;+\; \sum_{p=1}^{P} j_p(n)\, \boldsymbol{w}^{\dagger}\, G_{num}\, \boldsymbol{J}_p \;+\; \boldsymbol{w}^{\dagger} G_{num}\, \boldsymbol{b}_a(n) \;+\; \boldsymbol{w}^{\dagger} G_{num}\, \boldsymbol{b}_T(n) \tag{3}$$

où $T_e$ est la période d'échantillonnage, $G_{num}$ est la matrice diagonale ($N \times N$) dont les éléments diagonaux sont les gains des chaînes de numérisation

## A2. *Expression pour une mise en oeuvre analogique ou hybride de l'antenne adaptative*

La figure 6 présente la structure de l'antenne adaptative dans le cas d'une mise en oeuvre analogique ou hybride de l'antenne adaptative, c'est-à-dire pour une application analogique des filtres adaptatifs.

Les $N$ capteurs Ci du réseau correspondent soit à des ER, soit à des sous-réseaux préformés en analogique. Dans le contexte d'une implantation analogique des filtres, le vecteur, $\boldsymbol{x}(t)$, des enveloppes complexes des signaux ramenés au point P1 de la figure 6 s'écrit, à l'instant $t$

$$\boldsymbol{x}(t) \quad = \quad \sum_{u=1}^{U} s_u(t)\, \boldsymbol{S}_u \;+\; \sum_{p=1}^{P} j_p(t)\, \boldsymbol{J}_p \;+\; \boldsymbol{b}_a(t) \tag{4}$$

où $\boldsymbol{b}_a(t)$ est le vecteur bruit au point P1 provenant du réseau de capteurs actifs (bruit externe + bruit thermique des chaînes de réception RF) et où les autres paramètres sont définis au paragraphe précédent.

Sous les hypothèses précédentes, l'enveloppe complexe, y(n), de la sortie échantillonnée du BFN de communication antibrouillé associé au jeu de pondérations $\boldsymbol{w}$, s'écrit :

$$y(n) \;\overset{\triangle}{=}\; \alpha\, \{\, \boldsymbol{w}^{\dagger}\, G\, \boldsymbol{x}(n) \;+\; b_T(n) \,\}$$

$$= \alpha\, \{\, \sum_{u=1}^{U} s_u(n)\, \boldsymbol{w}^{\dagger}\, G\, \boldsymbol{S}_u \;+\; \sum_{p=1}^{P} j_p(n)\, \boldsymbol{w}^{\dagger}\, G\, \boldsymbol{J}_p \;+\; \boldsymbol{w}^{\dagger}\, G\, \boldsymbol{b}_a(n) \;+\; b_T(n) \,\} \tag{5}$$

où G est la matrice diagonale ($N \times N$) dont les éléments diagonaux sont les gains des chaînes RF, $\boldsymbol{w}$ le vecteur des pondérations analogiques, $\alpha$ le gain de la chaîne de numérisation de la sortie du BFN et $b_T(n)$ le bruit thermique de la chaîne de numérisation de la sortie ramené au point P3.

En pratique, la matrice G est généralement connue pour une température de référence $T_0$ et est notée $G_0$. Pour une température antenne, $T_{Ant}$, la matrice G n'est plus égale à $G_0$ mais prend la valeur

$$G = [G_0{}^2 + (T_{Ant} - T_0)\,\delta G^2\,\mathrm{I}]^{1/2} \tag{6}$$

où $\delta G$ est un coefficient de variation du gain en amplitude des chaînes RF avec la température et I est la matrice identité.

**B. Puissance de la sortie d'un BFN de communication antibrouillé**

**B1. *Expression pour une mise en oeuvre numérique de l'antenne adaptative***

En supposant tous les signaux décorrélés les uns des autres, on déduit de l'équation (3) la puissance de la sortie du BFN de communication, dans le cas d'une application numérique des filtres adaptatifs, donnée par

$$\pi_y \;\triangleq\; <\mathrm{E}[|\,y(n)|^2] > \;=\; w^\dagger\, G_{num}\, R_x\, G_{num}{}^\dagger\, w \tag{7}$$

$$= \sum_{u=1}^{U} \pi_u\,|\,w^\dagger\, G_{num}\, S_u\,|^2 + \sum_{p=1}^{P} \pi_p\,|\,w^\dagger\, G_{num}\, J_p\,|^2 + (\eta_a + \eta_T)\, w^\dagger G_{num}\, G_{num}{}^\dagger\, w$$

où <.> correspond à l'opération de moyennage temporel sur un horizon d'observation infini, $R_x \triangleq <\mathrm{E}[x(n)\,x(n)^\dagger]>$ est la matrice de corrélation moyennée de $x(n)$, $\pi_u \triangleq <\mathrm{E}[|s_u(n)|^2]>$ est la puissance moyenne de la station $u$ captée par un ER omnidirectionnel, $\pi_p \triangleq <\mathrm{E}[|j_p(n)|^2]>$ est la puissance moyenne du brouilleur $p$ captée par un ER omnidirectionnel, $\eta_a$ et $\eta_T$, telles que $<\mathrm{E}[b_a(n)\,b_a(n)^\dagger]> = \eta_a\,\mathrm{I}$ et $<\mathrm{E}[b_T(n)\,b_T(n)^\dagger]> = \eta_T\,\mathrm{I}$, sont les puissances moyennes équivalentes par capteur et ramenées en P1 de bruit, respectivement de l'antenne et thermique, supposés blancs spatialement.

En introduisant les puissances $P_u$, $P_p$, $P_a$, $P_T$, respectivement de la station $u$, du brouilleur $p$, du bruit de l'antenne $a$ et du bruit thermique des chaînes de numérisation en sortie du BFN de communications, définies respectivement par

$$P_u = \pi_u\,|\,w^\dagger\, G_{num}\, S_u\,|^2 \tag{8}$$

$$P_p = \pi_p\,|\,w^\dagger\, G_{num}\, J_p\,|^2 \tag{9}$$

$$P_a = \eta_a\, w^\dagger G_{num}\, G_{num}{}^\dagger\, w \tag{10}$$

$$P_T = \eta_T\, w^\dagger G_{num}\, G_{num}{}^\dagger\, w \tag{11}$$

l'expression (7) prend la forme suivante

$$\pi_y = \sum_{u=1}^{U} P_u + \sum_{p=1}^{P} P_p + P_a + P_T \tag{12}$$

Les puissances $\eta_a$ et $\eta_T$ sont données par

$$\eta_a = \mathrm{k}\, T_a\, B \tag{13}$$

$$\eta_T = \mathrm{k}\, T_T\, B \tag{14}$$

où k est la constante de Boltzman, $B$ la bande de réception et $T_a$ et $T_T$ sont les températures de bruit de l'antenne et de bruit thermique, équivalentes par capteur en P1. La température de bruit thermique équivalente en P1 par capteur, $T_T$, se calcule à partir de la température ambiante, $T_{amb}$, et des facteurs de bruit des éléments de la chaîne de numérisation pour le capteur considéré. En pratique, la température de bruit antenne équivalente en P1 est généralement connue pour une température de référence $T_0$ et est notée $T_{a0}$. Pour une température antenne, $T_{Ant}$, la température de bruit $T_a$ n'est plus égale à $T_{a0}$ mais prend la valeur

$$T_a \;=\; T_{a0} \;+\; (T_{Ant} - T_0)\,\delta T \tag{15}$$

où $\delta T$ est un gradient de température de bruit par rapport à la température de l'antenne, connu a priori.

Par ailleurs, la puissance $\pi_u$ de la station $u$ est liée à sa PIRE, PIRE($u$), par l'expression suivante

$$\pi_u \;=\; \mathrm{PIRE}(u)\ (\lambda\ /\ 4\ \pi\ r_u)^2 \tag{16}$$

où $\lambda$ est la longueur d'onde de l'onde porteuse et $r_u$ la distance entre la station $u$ et le satellite. Une relation similaire relie la puissance $\pi_p$ du brouilleur $p$ et sa PIRE, PIRE($p$).

**B2. *Expression pour une mise en oeuvre analogique des filtres adaptatifs***

Toujours sous l'hypothèse de signaux décorrélés les uns des autres, on déduit de l'expression (5) la puissance de la sortie du BFN de communication, dans le cas d'une application analogique des filtres adaptatifs, s'exprimant

$$\pi_y \;\triangleq\; <\mathrm{E}[|\,y(n)|^2]\,> \;=\; |\alpha|^2\,\{\ w^\dagger G\,R_x\,G^\dagger\,w\ +\ \eta_T\,\}$$

$$=\; |\alpha|^2\,\{\quad \pi_u\,|\,w^\dagger\,G\,S_u\,|^2 \;+\; \sum_{p=1}^{P}\ \pi_p\,|\,w^\dagger\,G\,J_p\,|^2 \;+\; \eta_a\,w^\dagger\,G\,G^\dagger\,w \;+\; \eta_T\} \tag{17}$$

où $\eta_a$, telle que $<\mathrm{E}[b_a(n)\,b_a(n)^\dagger]> = \eta_a\,\mathbf{I}$, est la puissance moyenne, au point P1, de bruit par capteur provenant du réseau actif (bruit externe + bruit thermique des chaînes de réception), $\eta_T \triangleq <\mathrm{E}[|b_T(n)|^2]>$ est la puissance moyenne de bruit thermique issu de la chaîne de numérisation ramené en P3. Les quantités $\eta_a$ et $\eta_T$ sont définies respectivement par (13) et (14) où $T_a$ est la température de bruit équivalente par capteur de l'antenne active en P1 et où $T_T$ est la température de bruit thermique équivalente issue de la chaîne de numérisation et ramenée en P3. De même, les puissances $\pi_u$ et $\pi_p$ sont liées aux PIRE par l'expression (16).

En introduisant les puissances $P'_u$, $P'_p$, $P'_a$, $P'_T$, respectivement de la station $u$, du brouilleur $p$, du bruit de l'antenne et du bruit thermique de la chaîne de numérisation en sortie du BFN de communications, définies respectivement par

$$P'_u \;=\; |\alpha|^2\,\pi_u\,|\,w^\dagger\,G\,S_u\,|^2 \tag{18}$$

$$P'_p \;=\; |\alpha|^2\,\pi_p\,|\,w^\dagger\,G\,J_p\,|^2 \tag{19}$$

$$P'_a \;=\; |\alpha|^2\,\eta_a\,w^\dagger G\,G^\dagger\,w \tag{20}$$

$$P'_T \;=\; |\alpha|^2\,\eta_T \tag{21}$$

l'expression (17) prend la forme (12).

**Principe de l'invention**

Les étapes du procédé selon l'invention reposent notamment sur l'idée suivante : à partir d'une estimation de la puissance moyenne, $\pi_y$, de la sortie du BFN de communication et des estimées des quantités $P_u$, $P_a$ et $P_T$, $P'_u$, $P'_a$ et $P'_T$, le procédé permet d'estimer l'efficacité de l'antibrouillage. Ceci est réalisé notamment en estimant différents rapports brouilleurs résiduels sur station, dans la bande de réception, en sortie du BFN de communication.

Par exemple, selon un exemple de mise en oeuvre, le procédé utilise trois rapports brouilleurs résiduels sur station, dont les valeurs permettent d'évaluer l'efficacité de l'antibrouillage ou du jeu de pondérations $w$ considéré en sortie du BFN de communications. Les trois rapports considérés dans la suite du document correspondent :

- au rapport des puissances respectivement de la somme des brouilleurs résiduels et de la somme des stations dans la bande de réception $B$, appelé par la suite (J/S par canal) et noté $J_{tot}/S_{tot}$
- au rapport des puissances respectivement de la somme des brouilleurs résiduels et de la puissance de la station $u$ dans la bande de réception $B$, appelé par la suite (J/S$_u$ par canal) et noté $J_{tot}/S_u$
- au rapport des puissances respectivement de la somme des brouilleurs résiduels et de la puissance d'une station, dans la bande $B_u$ de la station, appelé par la suite (J/S par station ou par liaison) et noté, pour la station $u$, $J/S_u$.

Ces quantités sont définies respectivement par

$$J_{tot}/S_{tot} \;=\; \left( \sum_{p=1}^{P} P_p \right) / \left( \sum_{u=1}^{U} P_u \right) \qquad (22)$$

$$J_{tot}/S_u \;=\; \left( \sum_{p=1}^{P} P_p \right) / P_u \qquad (23)$$

$$J_u/S_u \;=\; \left( \sum_{p=1}^{P} P_{pu} \right) / P_u \qquad (24)$$

où $P_{pu}$ est la puissance du brouilleur $p$ dans la bande $B_u$.

La quantité $P_u$, $P'_u$ définie respectivement par (8) ou (18), s'estime à partir de la connaissance a priori du théâtre d'opération (PIRE et position des stations utiles), de la fréquence centrale de la bande de réception, des réponses des capteurs du réseau, du jeu de pondérations $w$ ainsi que des gains des chaînes de réception et numérisation, $G_{num}$, $G$, $\alpha$, connus a priori ou calculés par (6) à partir de la température de l'antenne et du paramètre $\delta G$.

La quantité $P_a$, $P'_a$ définie respectivement par (10) ou (20), s'estime à partir de la connaissance a priori du jeu de pondération $w$, des gains des chaînes de réception et/ou numérisation, $G_{num}$, $G$, $\alpha$, connus a priori ou calculés par (6) à partir de la température de l'antenne et du paramètre $\delta G$, ($\delta G$ est un coefficient de variation du gain en amplitude des chaînes RF avec la température) ainsi que de la température de bruit équivalente de l'antenne, $T_a$, en P1 elle-même fonction de la température de l'antenne, $T_{Ant}$, de la température de référence $T_0$, de la température de bruit de l'antenne, $T_{a0}$, en P1 à la température $T_0$ et de la variation de température de bruit, $\delta T$, avec la température.

Enfin, la quantité $P_T$, $P'_T$ définie par (11) ou (21), s'estime, pour une implantation numérique, à partir de la connaissance a priori du jeu de pondérations $w$, des gains des chaînes de numérisation, $G_{num}$, ainsi que de la température de bruit thermique équivalente par capteur en P1, $T_r$. Pour une implantation analogique des filtres, la quantité $P_T$ s'estime à partir de la connaissance du gain, $\alpha$, de la chaîne de numérisation en sortie du BFN et de la température de bruit thermique de celle-ci ramenée en P3, $T_r$. Dans les deux cas, la quantité $T_r$ s'estime à partir de la température ambiante $T_{amb}$ et des facteurs de bruit des éléments constituants la ou les chaînes de numérisation.

**C. Estimation des J/S en sortie du BFN de communication**

L'estimation des rapports définis par les expressions (22) à (24) nécessite, pour une implantation numérique des filtres, celle des quantités $\pi_y$, $P_u$, $P_a$ et $P_T$ définies, respectivement par (7), (8), (10) et (11) et, pour une implantation analogique des filtres, celles des quantités $P'_u$, $P'_a$ et $P'$ définies respectivement par (17), (18), (20) et (21).

### C1. Estimation de $\pi_y$

Le procédé estime la puissance moyenne $\pi_y$ de la sortie du BFN de communication à partir d'un nombre $K$ d'échantillons, $y(k)$, $1 \leq k \leq K,$ de cette sortie. Pour un facteur de suréchantillonnage suffisant, un estimateur asymptotiquement non biaisé de cette puissance moyenne est donné par

$$\hat{\pi}_y \triangleq \frac{1}{K} \sum_{k=1}^{K} | y(k) |^2 \tag{25}$$

Cet estimateur devient consistant pour des sorties stationnaires et ergodiques ou des sorties cyclostationnaires et cycloergodiques.

### C2. Estimation de $P_u$

Le procédé estime $\hat{P}_u$, $\hat{P}'_u$ de la puissance $P_u$, $P'_u$ définie par (8) ou (18), en utilisant d'une part, la connaissance a priori des paramètres $w$ et $G_{num}$ pour une application numérique des filtres adaptatifs et $|\alpha|^2$, $w$ et $G$ pour une application analogique de ces filtres et d'autre part l'estimation des paramètres $\pi_u$ et $S_u$.

Le jeu de pondérations appliqué $w$ est connu en permanence alors que les gains matriciel $G_{num}$ et scalaire $|\alpha|^2$ des chaînes de numérisation sont des paramètres réglables du sol par l'opérateur de manière à optimiser l'utilisation de la dynamique du ou des CAN en fonction de l'environnement de brouillage. La matrice $G$ des gains en amplitude des chaînes de réception analogiques est maîtrisée, via l'expression (6), à partir de la connaissance de la matrice $G_0$ des gains pour la température de référence $T_0$, du paramètre $\delta G$ et du contrôle permanent de la température de l'antenne $T_{Ant}$.

La puissance moyenne, $\pi_u$, de la station $u$, reçue par un capteur omnidirectionnel s'estime par l'expression (16) où la PIRE, PIRE($u$), de la station $u$ est connue a priori et répertoriée dans un plan de mission, où $\lambda$ est déduit du canal fréquentiel considéré et où $r_u$ est déduit, pour un satellite géostationnaire, de la position de la station $u$ sur la terre.

Enfin, le vecteur directeur $S_u$, dont la composante $n$ est donnée par (2), se déduit de la connaissance a priori des positions, $r_n$, des capteurs du réseau, du vecteur d'onde $k_u$ via la position de la station $u$, de la polarisation, $\eta_u$, de la station $u$ et des réponses complexes $f_n(k_u, \eta_u)$ des capteurs pour le vecteur d'onde $k_u$ et la polarisation $\eta_u$.

### C3. Estimation de $P_a$

Le procédé estime $\hat{P}_a$, $\hat{P}'_a$ de la puissance $P_a$, $P'_a$ définie par (10) ou (20), en utilisant d'une part, la connaissance a priori des paramètres $w$ et $G_{num}$ pour une application numérique des filtres adaptatifs et $|\alpha|^2$, $w$ et $G$ pour une application analogique de ces filtres et d'autre part l'estimation du paramètre $\eta_a$.

La maîtrise des paramètres $w$, $G_{num}$, $G$ et $|\alpha|^2$ est discutée au paragraphe précédent. L'estimation de la puissance, $\eta_a$, du bruit de l'antenne par capteur au point P1 se calcule par l'expression (13) où la température de bruit équivalente de l'antenne, $T_a$, en P1 s'obtient par l'expression (15) à partir de la connaissance a priori de la température de référence $T_0$, de la température de bruit de l'antenne, $T_{a0}$, en P1 à la température $T_0$, de la variation de la température de bruit, $\delta T$, avec la température et de la mesure permanente de la température de l'antenne $T_{Ant}$.

### C4. Estimation de $P_T$

Le procédé estime, $\hat{P}_T$, $\hat{P}'_T$ de la puissance $P_T$, $P'_T$ définie par (11) ou (21), et requiert d'une part, la connaissance a priori des paramètres $w$ et $G_{num}$ pour une application numérique des filtres adaptatifs et $|\alpha|^2$ pour une application analogique de ces filtres et d'autre part l'estimation du paramètre $\eta_T$.

La maîtrise des paramètres $w$, $G_{num}$ et $|\alpha|^2$ est donnée au paragraphe B. L'estimation de la puissance, $\eta_T$, s'effectue à partir de l'expression (14) où $T_T$ est la température de bruit thermique équivalente d'une chaîne de numérisation capteur ramenée en P1, pour une application des filtres adaptatifs en numérique, et de la chaîne de numérisation de la sortie du BFN ramené en P3, pour une application des filtres en analogique. Dans les deux cas, la quantité $T_r$ s'estime à partir de la température ambiante $T_{amb}$ et des facteurs de bruit des éléments constituants la ou les chaînes de numérisation.

Ayant estimé les différentes valeurs $\pi_y$, $P_u$, $P_a$ et $P_T$, le procédé estime au moins un des trois rapports $\hat{J}_{tot}/\hat{S}_{tot}$, $\hat{J}_{tot}/\hat{S}_u$, $\hat{J}/\hat{S}_u$.

Les expressions ont été données pour le cas d'une application numérique des filtres adaptatifs et restent valables en échangeant les lettres, $P_u$, $P_a$ et $P_T$, par les lettres , $P'_u$, $P'_a$ et $P'_T$, pour une application analogique des filtres adaptatifs.

**C5. Estimation de $J_{tot}/S_{tot}$**

A partir des estimations précédentes, on en déduit une estimation, $\hat{J}_{tot}/\hat{S}_{tot}$, du rapport $J_{tot}/S_{tot}$ défini par (22), donnée par

$$\hat{J}_{tot}/\hat{S}_{tot} \;=\; (\hat{\pi}_y - \sum_{u=1}^{U} \hat{P}_u - \hat{P}_a - \hat{P}_T)\,/\,(\sum_{u=1}^{U} \hat{P}_u) \qquad (26)$$

**C6. Estimation de $J_{tot}/S_u$**

A partir des estimations précédentes, le procédé en déduit une estimation, $\hat{J}_{tot}/\hat{S}_u$, du rapport $J_{tot}/S_u$ défini par (23), donnée par

$$\hat{J}_{tot}/\hat{S}_u \;=\; (\hat{\pi}_y - \sum_{u=1}^{U} \hat{P}_u - \hat{P}_a - \hat{P}_T)\,/\,\hat{P}_u \qquad (27)$$

**C7. Estimation de $J/S_u$**

L'estimation, $\hat{J}/\hat{S}_u$, du rapport $J/S_u$ défini par l'expression (24), nécessite l'estimation de la puissance totale de brouilleurs résiduels dans la bande $B_u$ de la station utile $u$. Cette estimation nécessite les opérations suivantes :

- réception des échantillons, $y(k)$, de la sortie $y(t)$ du BFN de communication.
- filtrage passe-bande des échantillons autour de la bande $B_u$. On obtient les échantillons $y_u(k)$.
- estimation de la puissance de la sortie filtrée par (25) où $y_u(k)$ remplace $y(k)$. On obtient $\hat{\pi}_{yu}$
- estimation des puissances de bruit respectivement antenne et thermique en sortie du BFN dans la bande $B_u$. Ces quantités se calculent, à partir des températures de bruit équivalentes calculées précédemment, par les expressions respectivement (13) et (14) où $B$ est remplacé par $B_u$. On obtient ainsi $\hat{P}_{au}$ et $\hat{P}_{Tu}$.
- calcul de la puissance des stations $v$ autres que la station $u$ dans la bande $B_u$ en sortie du BFN de communications. La démarche est celle de l'étape B mais où, pour chaque station $v$ différentes de $u$, la PIRE utilisée dans le calcul de $\hat{\pi}_v$ est celle de la station $v$ dans la bande $B_u$. On obtient ainsi les quantités $\hat{P}_{vu}$.
- calcul du rapport $\hat{J}/\hat{S}_u$, par l'expression

$$\hat{J}/\hat{S}_u \;=\; (\hat{\pi}_{yu} - \hat{P}_u - \sum_{v\neq u} \hat{P}_{vu} - \hat{P}_{au} - \hat{P}_{Tu})\,/\,\hat{P} \qquad (28)$$

Connaissant au moins l'estimée d'au moins un des trois rapports, le procédé compare la ou les valeurs estimées à une valeur seuil Vs.

Si la valeur trouvée est au-dessus de cette valeur seuil, le procédé émet un message d'inefficacité de l'antibrouillage. Dans le cas contraire le message avertit par exemple un opérateur que l'efficacité de brouillage est suffisante.

Les valeurs seuils tiennent compte d'une part de la puissance de brouillage admissible par station ou par canal pour assurer la démodulation des stations du canal et d'autre part, de la précision d'estimation des rapports précédents. Les calculs de précision effectués aux paragraphes Di montrent que pour des rapports brouilleurs sur stations en sortie supérieurs à 0 dB, la précision d'estimation de ces rapports par le procédé proposé est très bonne alors que cette précision est décroissante avec les rapports brouilleurs sur signal en sortie. Dans ce contexte, on pourra considérer que l'antibrouillage n'est pas efficace si les rapports brouilleurs sur station en sortie dépassent 0 dB.

Ainsi, la maîtrise de la précision avec laquelle les estimateurs donnés ci-dessus estiment les différents rapports Brouilleur/Station considérés permet notamment une exploitation opérationnelle efficace de ces estimateurs. Pour cette raison, le procédé peut comporter une étape de détermination de la précision de chacun de ces trois estimateurs.

**D1. Précision d'estimation de $\pi_y$**

L'estimée $\hat{\pi}_y$ est reliée à $\pi_y$ par l'expression suivante :

$$\hat{\pi}_y \;\triangleq\; \pi_y\,(1 + \Delta\pi_y) \tag{29}$$

où $\Delta\pi_y$ caractérise l'erreur sur l'estimation de $\Delta\pi_y$. l'expression précédente exprimée en dB devient

$$(\hat{\pi}_y)_{\mathrm{dB}} \;=\; (\pi_y)_{\mathrm{dB}} \;+\; 10\log_{10}(1 + \Delta\pi_y) \;\triangleq\; (\pi_y)_{\mathrm{dB}} \;+\; \Delta(\pi_y)_{\mathrm{dB}} \tag{30}$$

En supposant les échantillons y(k) indépendants (toutes les sources sont étalées dans la bande B de réception), stationnaires et Gaussiens, l'estimateur (25) est non biaisé ($E[\hat{\pi}_y] = \pi_y$) et de variance

$$\mathrm{Var}[\hat{\pi}_y] \;=\; \pi_y^{\,2}\,/\,K \tag{31}$$

soit un écart type de

$$\sigma[\hat{\pi}_y] \;=\; \pi_y\,/\,\sqrt{K} \tag{32}$$

Ainsi, dans 99% des cas, l'estimateur $\hat{\pi}_y$ est tel que

$$\pi_y\,(1 - 3\,/\,\sqrt{K}) \;\le\; \hat{\pi}_y \;\le\; \pi_y\,(1 + 3\,/\,\sqrt{K}) \tag{33}$$

où $\Delta\pi_y$ est une variable aléatoire centrée, quasi-Gaussienne pour K grand et d'écart type $1\,/\sqrt{K}$. Ainsi, dans 99% des cas,

$$-\,3\,/\,\sqrt{K} \;\le\; \Delta\pi_y \;\le\; 3\,/\,\sqrt{K} \tag{34}$$

$$10\log_{10}(1 - 3\,/\,\sqrt{K}) \;\le\; \Delta(\pi_y)_{\mathrm{dB}} \;\le\; 10\log_{10}(1 + 3\,/\,\sqrt{K}) \tag{35}$$

*Application numérique :*

*Pour K = 1000, on obtient*

*- 0.4 dB $\le \Delta(\pi_y)_{dB} \le$ 0.4 dB soit une précision de $\pm$0.4 dB.*

**D2. Précision d'estimation de $P_u$**

Des expressions (8), (16) et (18), on déduit l'expression de la puissance $P_u$ en sortie du BFN de communication pour une application des filtres respectivement numérique et analogique, donnée respectivement par

$$P_u \;=\; \mathrm{PIRE}(u)\,(\lambda\,/\,4\,\pi\,r_u)^2\,|\,w^{\dagger}\,G_{num}\,S_u\,|^2 \tag{36}$$

$$P'_u \;=\; \mathrm{PIRE}(u)\,(\lambda\,/\,4\,\pi\,r_u)^2\,|\alpha|^2\,|\,w^{\dagger}\,G\,S_u\,|^2 \tag{37}$$

Dès lors, la puissance de la station u, $\hat{P}_u$ reconstruite à partir des informations sur la mission s'écrit, pour une application respectivement numérique et analogique des filtres

$$\hat{P}_u \;\triangleq\; P_u(1 + \Delta P_u) \;=\; P_u(1 + \Delta\mathrm{PIRE}(u))\,(1 + \Delta|\,w^{\dagger}\,G_{num}\,S_u\,|^2) \tag{38}$$

$$\hat{P'}_u \triangleq P'_u(1 + \Delta P'_u) = P'_u(1 + \Delta\text{PIRE}(u))(1 + \Delta|\alpha|^2)(1 + \Delta|w^\dagger G S_u|^2) \tag{39}$$

où les quantités $\Delta\text{PIRE}(u)$, $\Delta|\alpha|^2$, $\Delta|w^\dagger G_{num} S_u|^2$ et $\Delta|w^\dagger G S_u|^2$ sont les erreurs sur les connaissances respectives de PIRE$(u)$, $|\alpha|^2$, $|w^\dagger G_{num} S_u|^2$ et $|w^\dagger G S_u|^2$.

On déduit des expressions précédentes celle de $\hat{P}_u$ en dB, donnée par

$$(\hat{P}_u)_{\text{dB}} = (P_u)_{\text{dB}} + 10\log_{10}(1 + \Delta P_u) \triangleq$$
$$(P_u)_{\text{dB}} + \Delta(P_u)_{\text{dB}} \tag{40}$$

où, pour une application des filtres en numérique

$$\Delta(P_u)_{\text{dB}} = \Delta(\text{PIRE}(u))_{\text{dB}} + \Delta(|w^\dagger G_{num} S_u|^2)_{\text{dB}} \tag{41}$$

alors que pour une application des filtres en analogique

$$\Delta(P'_u)_{\text{dB}} = \Delta(\text{PIRE}(u))_{\text{dB}} + \Delta(|\alpha|^2)_{\text{dB}} + \Delta(|w^\dagger G S_u|^2)_{\text{dB}} \tag{42}$$

*Application numérique :*

*Par exemple, si on suppose que*

- *l'incertitude sur la PIRE des stations, $\Delta(PIRE(u))_{dB}$, est de $\pm 2$ dB*
- *l'incertitude sur le gain de la chaîne de numérisation de la sortie du BFN, $\Delta(|\alpha|^2)_{dB}$, est de $\pm 0.5$ dB (à cause des dérives en températures et de l'application effective du gain)*
- *l'incertitude, $\Delta(|w^\dagger G_{num} S_u|^2)_{dB}$, est de $\pm 1$ dB à cause de $\pm 0.5$ dB d'incertitude sur les gains des chaînes de numérisation et de $\pm 0.5$ dB d'incertitude sur les composantes du vecteur directeur $S_u$ à cause des incertitudes sur la position de la station et sur les réponses des capteurs*
- *l'incertitude, $\Delta(|w^\dagger G S_u|^2)_{dB}$, est de $\pm 1$ dB pour les mêmes raisons que précédemment*

*on obtient $\Delta(P_u)_{dB} = \pm 3$ dB pour une application numérique des filtres et $\Delta(P_u)_{dB} = \pm 3.5$ dB pour une application analogique des filtres.*

**D3. Précision d'estimation de $P_a$**

Des expressions (10), (13) et (20), on déduit les expressions de la puissance $P_a$ en sortie du BFN de communication pour une application des filtres respectivement numérique et analogique, données respectivement par

$$P_a = k\, T_a\, B\, w^\dagger G_{num}\, G_{num}^\dagger\, w \tag{43}$$

$$P'_a = k\, T_a\, B\, |\alpha|^2\, w^\dagger G\, G^\dagger\, w \tag{44}$$

Dès lors, la puissance de bruit antenne, $\hat{P}_a$, reconstruite à partir des informations sur les chaînes de réception, le jeu de pondérations complexes et la température de bruit antenne s'écrit, pour une application respectivement numérique et analogique des filtres

$$\hat{P}_a \triangleq P_a(1 + \Delta P_a) = P_a(1 + \Delta T_a)(1 + \Delta(w^\dagger G_{num}\, G_{num}^\dagger\, w)) \tag{45}$$

$$\hat{P}'_a \triangleq P'_a(1 + \Delta P'_a) = P'_a(1 + \Delta T_a)(1 + \Delta|\alpha|^2)(1 + \Delta(w^\dagger G\ G^\dagger\ w)) \quad (46)$$

où les quantités $\Delta T_a$, $\Delta|\alpha|^2$, $\Delta(w^\dagger G_{num}\ G_{num}{}^\dagger\ w)$ et $\Delta(w^\dagger G\ G^\dagger\ w)$ sont les erreurs sur les connaissances respectives de $T_a$, $|\alpha|^2$, $w^\dagger G_{num}\ G_{num}{}^\dagger\ w$ et $w^\dagger G\ G^\dagger\ w$.

On déduit des expressions précédentes celle de $\hat{P}_a$ en dB, donnée par

$$(\hat{P}_a)_{dB} = (P_a)_{dB} + 10\log_{10}(1 + \Delta P_a) \triangleq (P_a)_{dB} + \Delta(P_a)_{dB} \quad (47)$$

où, pour une application des filtres en numérique

$$\Delta(P_a)_{dB} = \Delta(T_a)_{dB} + \Delta(w^\dagger G_{num}\ G_{num}{}^\dagger\ w)_{dB} \quad (48)$$

alors que pour une application des filtres en analogique

$$\Delta(P'_a)_{dB} = \Delta(T_a)_{dB} + \Delta(w^\dagger G\ G^\dagger\ w)_{dB} + \Delta(|\alpha|^2)_{dB} \quad (49)$$

*Application numérique :*

*Par exemple, si on suppose que*

- *l'incertitude sur la température antenne est de $\pm 0.5$ dB*
- *l'incertitude sur le gain de la chaîne de numérisation de la sortie du BFN, $\Delta(|\alpha|^2)_{dB}$, est de $\pm 0.5$ dB (à cause des dérives en températures et de l'application effective du gain)*
- *les incertitudes, $\Delta(w^\dagger G_{num}\ G_{num}{}^\dagger\ w)_{dB}$ et $\Delta(w^\dagger G\ G^\dagger w)_{dB}$ sont de $\pm 0.5$ dB à cause de $\pm 0.5$ dB d'incertitude sur les gains des chaînes RF et de numérisation*

*On obtient $\Delta(P_a)_{dB} = \pm 1$ dB pour une application numérique des filtres et $\Delta(P_u)_{dB} = \pm 1.5$ dB pour une application analogique des filtres.*

## D4. Précision d'estimation de $P_T$

Des expressions (11), (14) et (21), on déduit les expressions de la puissance $P_T$ en sortie du BFN de communication pour une application des filtres respectivement numérique et analogique, données respectivement par

$$P_T = k\ T_T\ B\ w^\dagger G_{num}\ G_{num}{}^\dagger\ w \quad (50)$$

$$P'_T = k\ T_T\ B\ |\alpha|^2 \quad (51)$$

où $T_T$ a un sens différent suivant la nature de l'implémentation. Dès lors, la puissance de bruit thermique, $\hat{P}_T$, reconstruite à partir des informations sur les chaînes de réception, le jeu de pondérations complexes et la température de bruit thermique en P1 pour une implantation numérique et en P3 pour une implantation analogique, s'écrit, pour une application respectivement numérique et analogique des filtres

$$\hat{P}_T \triangleq P_T(1 + \Delta P_T) = P_T(1 + \Delta T_T)(1 + \Delta(w^\dagger G_{num}\ G_{num}{}^\dagger\ w)) \quad (52)$$

$$\hat{P}'_T \triangleq P'_T(1 + \Delta P'_T) = P'_T(1 + \Delta T_T)(1 + \Delta|\alpha|^2) \quad (53)$$

où les quantités $\Delta T_T$, $\Delta|\alpha|^2$ et $\Delta(w^\dagger G_{num}\ G_{num}{}^\dagger\ w)$ sont les erreurs sur les connaissances respectives de $T_T$, $|\alpha|^2$ et $w^\dagger G_{num}\ G_{num}{}^\dagger\ w$.

On déduit des expressions précédentes celle de $\hat{P}_T$ en dB, donnée par

$$(\hat{P}_T)_{\text{dB}} \;=\; (P_T)_{\text{dB}} \;+\; 10\log_{10}(1+\Delta P_T) \;\triangleq\; (P_T)_{\text{dB}} \;+\; \Delta(P_T)_{\text{dB}} \qquad (54)$$

où, pour une application des filtres en numérique

$$\Delta(P_T)_{\text{dB}} \;=\; \Delta(T_T)_{\text{dB}} \;+\; \Delta(w^{\dagger} G_{num}\, G_{num}{}^{\dagger}\, w)_{\text{dB}} \qquad (55)$$

alors que pour une application des filtres en analogique

$$\Delta(P'_T)_{\text{dB}} \;=\; \Delta(T_T)_{\text{dB}} \;+\; \Delta(|\alpha|^2)_{\text{dB}} \qquad (56)$$

*Application numérique :*

*Par exemple, si on suppose que*

- *l'incertitude sur la température de bruit thermique est de $\pm 0.5$ dB*
- *l'incertitude sur le gain de la chaîne de numérisation de la sortie du BFN, $\Delta(|\alpha|^2)_{dB}$, est de $\pm 0.5$ dB (à cause des dérives en températures et de l'application effective du gain)*
- *les incertitudes, $\Delta(w^{\dagger} G_{num}\, G_{num}\dagger\, w)_{dB}$ sont de $\pm 0.5$ dB à cause de $\pm 0.5$ dB d'incertitude sur les gains des chaînes RF et de numérisation*

*On obtient $\Delta(P_T)_{dB} = \pm 1$ dB pour une application des filtres aussi bien numérique qu'analogique.*

**E. Précision d'estimation de $S_{tot}$**

L'estimation, $\hat{S}_{tot}$, de $S_{tot}$ s'écrit

$$\hat{S}_{tot} \;\triangleq\; S_{tot}(1+\Delta S_{tot}) \;=\; \sum_{u=1}^{U} \hat{P}_u \;=\; \sum_{u=1}^{U} P_u(1+\Delta P_u) \qquad (57)$$

soit en dB

$$(\hat{S}_{tot})_{\text{dB}} \;=\; (S_{tot})_{\text{dB}} \;+\; 10\log_{10}(1+\Delta S_{tot}) \;\triangleq\; (S_{tot})_{\text{dB}} \;+\; \Delta(S_{tot})_{\text{dB}} \qquad (58)$$

où

$$\Delta(S_{tot})_{\text{dB}} \;=\; 10\log_{10}\!\left(1 + \frac{\displaystyle\sum^{U} P_u\,\Delta P_u}{\displaystyle\sum_{u}^{U} P_u}\right) \qquad (59)$$

*Application numérique :*

*Par exemple, si on suppose que la précision sur la puissance des stations est identique pour toutes les stations, on obtient $\Delta(S_{tot})_{dB} \approx \Delta(P_u)_{dB} \approx \pm 3$ dB ou $\pm 3.5$ dB selon la nature de l'implantation*

**F. Précision d'estimation de $J_{tot}$**

L'estimation, $\hat{J}_{tot}$, de $J_{tot}$ s'écrit

$$\hat{J}_{tot} \quad \triangleq \quad J_{tot}(1 + \Delta J_{tot}) \;=\; \hat{\pi}_y \;-\; \sum_{u=1}^{U} \hat{P}_u \;-\; \hat{P}_a \;-\; \hat{P}_T \tag{60}$$

$$=\; \pi_y(1 + \Delta\pi_y) \;-\; \sum_{u=1}^{U} P_u(1 + \Delta P_u) \;-\; P_a(1 + \Delta P_a) \;-\; P_T(1 + \Delta P_T) \tag{61}$$

soit en dB

$$(\hat{J}_{tot})_{dB} \;=\; (J_{tot})_{dB} \;+\; 10\log_{10}(1 + \Delta J_{tot}) \;\triangleq\; (J_{tot})_{dB} \;+\; \Delta(J_{tot})_{dB} \tag{62}$$

où

$$\Delta(J_{tot})_{dB} \;=\; 10\log_{10}(1 + \frac{\pi_y\,\Delta\pi_y - \displaystyle\sum_{}^{U} P_u\,\Delta P_u - P_a\,\Delta P_a - P_T\,\Delta P_T}{\pi_y - \displaystyle\sum_{u}^{U} P_u - P_a - P_T}) \tag{63}$$

On déduit de ce résultat que la précision d'estimation de $J_{tot}$ dépend des contributions relatives de signal et de brouilleur en sortie échantillonnée du BFN de communication.

Plus précisément, pour des résidus de brouillage très forts devant les stations (soit à cause d'une absence d'antibrouillage, soit à cause d'un antibrouillage peu performant, en présence d'un brouillage fort en entrée), on déduit de (63) que la précision sur $J_{tot}$ avoisine la précision sur $\pi_y$.

*Application numérique :*

*Dans ces conditions,* $\Delta(J_{tot})_{dB} \approx \Delta(\pi_y)_{dB} \approx \pm 0.4$ dB.

En revanche, pour des résidus de brouillage très faibles devant les stations (soit à cause d'une absence de brouillage, soit à cause d'un antibrouillage performant), la puissance totale est proche de celle des utiles et l'erreur peut devenir très importante.

**G. Précision d'estimation de $J_{tot}/S_u$**

L'estimation, Est[$J_{tot}/S_u$], de $J_{tot}/S_u$ s'écrit

$$\text{Est}[J_{tot}/S_u] \;\triangleq\; (J_{tot}/S_u)(1 + \Delta(J_{tot}/S_u)) \;=\; \hat{J}_{tot}/\hat{S}_u \tag{64a}$$

$$=\; \frac{\pi_y(1 + \Delta\pi_y) \;-\; \displaystyle\sum^{U} P_u(1 + \Delta P_u) \;-\; P_a(1 + \Delta P_a) \;-\; P_T(1 + \Delta P_T)}{P_u(1 + \Delta P_u)} \tag{64b}$$

d'où

$$(1 + \Delta(J_{tot} / S_u)) = [1/\ (1 + \Delta P_u)\ ](1 + \frac{\pi_y \Delta\pi_y - \sum\limits^{U} P_u\Delta P_u - P_a\Delta P_a - P_T \Delta P_T}{\pi_y - \sum\limits^{U} P_u - P_a - P_T})$$

$$(65)$$

soit en dB

$$\Delta(J_{tot} / S_u)_{\text{dB}} =$$

$$10\log_{10}\ ([1/(1 + \Delta P_u)]\ (1 + \frac{\pi_y \Delta\pi_y - \sum\limits^{U} P_u\Delta P_u - P_a\Delta P_a - P_T \Delta P_T}{\pi_y - \sum\limits^{U} P_u - P_a - P_T})\ )) \quad (66)$$

On déduit de ce résultat que la précision d'estimation de $J_{tot}/S_u$ dépend des contributions relatives de signal et de brouilleur en sortie échantillonnée du BFN de communication.

Plus précisément, pour des résidus de brouillage très forts devant les stations (soit à cause d'une absence d'antibrouillage, soit à cause d'un antibrouillage peu performant, en présence d'un brouillage fort en entrée), on déduit de (66) que la précision sur $J_{tot}/S_u$ est donnée par

$$\Delta(J_{tot} / S_u)_{\text{dB}} = 10\log_{10}((\ 1 + \Delta\pi_y)/\ (1 + \Delta P_u)) = \Delta(\pi_y)_{\text{dB}} - \Delta(P_u)_{\text{dB}} \quad (67)$$

*Application numérique:*

*Dans ces conditions,* $\Delta(J_{tot}/S_u)_{\text{dB}} \approx \pm\ 3.4$ dB.

En revanche, pour des résidus de brouillage très faibles devant les stations (soit à cause d'une absence de brouillage, soit à cause d'un antibrouillage performant), la puissance totale est proche de celle des utiles et l'erreur peut devenir très importante.

## H. Précision d'estimation de $J_{tot}/S_{tot}$

L'estimation, Est[$J_{tot}/S_{tot}$], de $J_{tot}/S_{tot}$ s'écrit

$$\text{Est}[J_{tot} / S_{tot}]\ \triangleq\ (J_{tot} / S_{tot})\ (1 + \Delta(J_{tot} / S_{tot}))\ =\ \hat{J}_{tot} / \sum\limits_{u=1}^{U} \hat{P}_u \quad (67a)$$

$$=\ \frac{\pi_y(1 + \Delta\pi_y)\ -\ \sum\limits^{U} P_u(1 + \Delta P_u)\ -\ P_a(1 + \Delta P_a)\ -\ P_T(1 + \Delta P_T)}{\sum\limits_{u=1}^{U} P_u(1 + \Delta P_u)} \quad (67b)$$

d'où

$$(1 + \Delta(J_{tot} / S_{tot})) \quad = [ \sum_{}^{U} P_u / \sum_{}^{U} P_u(1 + \Delta P_u) ] \quad \text{x}$$

$$( 1 + \frac{\pi_y \Delta\pi_y - \sum^{U} P_u \Delta P_u - P_a \Delta P_a - P_T \Delta P_T}{\pi_y - \sum^{U} P_u - P_a - P_T} ) \quad (68)$$

soit en dB

$$\Delta(J_{tot} / S_{tot})_{\mathsf{dB}} = 10\log_{10} ([ \sum^{U} P_u / \sum^{U} P_u(1 + \Delta P_u) ])$$

$$+ \quad 10\log_{10} ( ( 1 + \frac{\pi_y \Delta\pi_y - \sum^{U} P_u \Delta P_u - P_a \Delta P_a - P_T \Delta P_T}{\pi_y - \sum^{U} P_u - P_a - P_T} ) ) \qquad (69)$$

On déduit de ce résultat que la précision d'estimation de $J_{tot}/S_{tot}$ dépend des contributions relatives de signal et de brouilleur en sortie échantillonnée du BFN de communication.

Plus précisément, pour des résidus de brouillage très forts devant les stations (soit à cause d'une absence d'antibrouillage, soit à cause d'un antibrouillage peu performant, en présence d'un brouillage fort en entrée), on déduit de (69) que la précision sur $J_{tot}/S_{tot}$ est donnée par

$$\Delta(J_{tot} / S_{tot})_{\mathsf{dB}} \quad = \quad 10\log_{10} ( ( 1 + \Delta\pi_y) [ \sum^{U} P_u / \sum^{U} P_u(1 + \Delta P_u) ] ) \quad =$$

$$\Delta(\Delta\pi_y)_{\mathsf{dB}} + 10\log_{10} ([ \sum^{U} P_u / \sum^{U} P_u(1 + \Delta P_u) ]) \qquad (70)$$

ce qui redonne (67) si toutes les stations ont même précision.

*Application numérique:*

*Dans ces conditions, à partir des exemples précédents,* $\Delta(J_{tot}/S_{tot})_{\mathsf{dB}} \approx \pm$ 3.4 dB.

En revanche, pour des résidus de brouillage très faibles devant les stations (soit à cause d'une absence de brouillage, soit à cause d'un antibrouillage performant), la puissance totale est proche de celle des utiles et l'erreur peut devenir très importante.

**Exemple de mise en oeuvre du procédé dans un système de communications**

Le procédé dont les étapes ont été exposées ci-dessus, est par exemple utilisé dans un système comportant une base située au sol et comprenant un calculateur programmé pour mettre en oeuvre les fonctions détaillées ci-après, la base étant en liaison, par des moyens connus de l'Homme du métier, avec un ou plusieurs satellites équipés de chaînes telles que celles décrites aux figures 5 et 6.

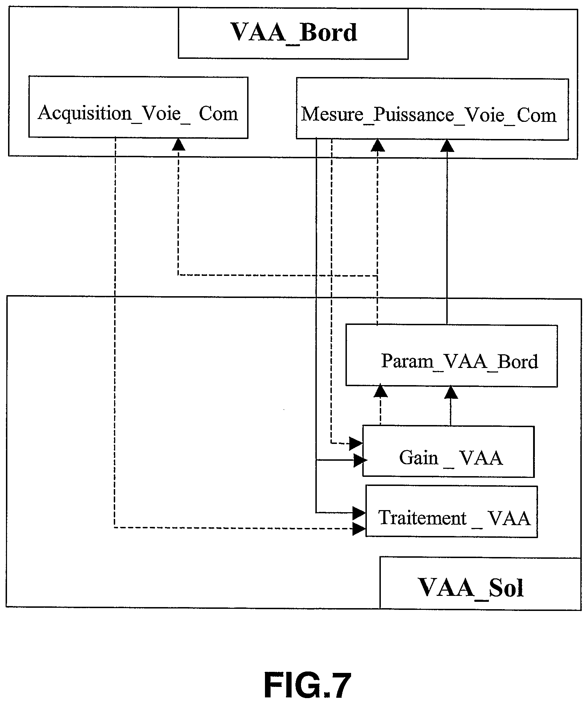

La figure 7 représente un synoptique d'un exemple de séquencement d'opérations. Deux séquencements d'opération sont possibles suivant que l'on souhaite estimer les quantités $J_{tot}/S_{tot}$ et $J_{tot}/S_u$ relatives à la bande B de réception ou au contraire la quantité $J_u/S_u$ relative à la bande de la station *u.* On parlera de Vérification par canal dans le premier cas et de vérification par station dans le second.

Pour une Vérification par canal, le procédé exécute les opérations représentées par un Trait plein sur la figure 7. A partir du sol et pour une bande de réception B, il exécute les fonctions suivantes :

-    *Mesure Puissance Voie Com :* dont le but est d'estimer la puissance totale disponible en sortie de la chaîne de numérisation du BFN de communications pour le jeu de pondérations appliqué et de l'envoyer au sol. Cette fonction est une fonction Bord paramétrée du Sol par la fonction *Param VAA Bord*, implémentée par exemple dans un calculateur,

- *Gain VAA :* dont le but est d'optimiser, à partir des résultats de la fonction Mesure Puissance Voie Com, le gain de la chaîne de numérisation de la sortie du BFN de communication à utiliser par les fonctions bord. Cette fonction est une fonction Sol,
- *Mesure Puissance Voie Com :* dont le but est d'estimer et d'envoyer au sol la puissance totale disponible en sortie de la chaîne de numérisation du BFN de communications pour le jeu de pondérations appliqué et pour le gain optimisé précédemment,..
- *Traitement VAA :* dont le but est d'estimer les quantités $J_{tot}/S_{tot}$ et $J_{tot}/S_u$ relatives à la bande de réception B. Cette fonction est une fonction Sol.

Pour une Vérification par station, le procédé exécute les opérations représentées en Trait pointillé sur la figure 7. A partir du sol et pour une bande de réception B, il exécute les fonctions suivantes :

- *Mesure Puissance Voie Com :* dont le but est d'estimer la puissance totale disponible en sortie de la chaîne de numérisation du BFN de communications pour le jeu de pondérations appliqué et de l'envoyer au sol. Cette fonction est une fonction Bord paramétrée du Sol par la fonction *Param VAA Bord*
- *Gain VAA :* dont le but est d'optimiser, à partir des résultats de la fonction Mesure Puissance Voie Com, le gain de la chaîne de numérisation de la sortie du BFN de communication à utiliser par les fonctions bord. Cette fonction est une fonction Sol
- *Acquisition Voie Com :* dont le but est d'acquérir et d'envoyer au sol les échantillons disponibles en sortie de la chaîne de numérisation du BFN de communications pour le jeu de pondérations appliqué et pour le gain optimisé précédemment. Cette fonction est une fonction Bord paramétrée du Sol par la fonction *Param VAA Bord*
- *Traitement VAA :* dont le but est d'estimer les quantités $J_u/S_u$ relatives aux stations u. Cette fonction est une fonction Sol.

**Fonction Param VAA Bord**

Sur réception de la demande de vérification de l'efficacité de l'antibrouillage, est lancée la fonction Param VAA Bord dont le rôle est d'élaborer les paramètres nécessaires aux fonctions *Mesure puissance voie com* ou *Acquisition voie com.* Ces paramètres sont :

- l'identifiant de la couverture considérée du satellite
- l'identifiant du canal fréquentiel de bande B considéré
- le gain de la chaîne de numérisation de la sortie du BFN de communication à utiliser par la fonction *Mesure Puissance voie com* ou *Acquisition voie com.* Nominalement ce gain est réglé à sa valeur minimale
- la fonction à lancer : *Mesure Puissance voie com* ou *Acquisition voie com*

**Fonction Mesure Puissance Voie Com**

La fonction Mesure Puissance Voie Com a pour buts :

- d'estimer la puissance disponible en sortie de la chaîne de numérisation du BFN de communication (expression (25))
- d'envoyer le résultat au sol.

**Fonction Acquisition Voie Com**

La fonction Acquisition Voie Com a pour buts :

- d'acquérir les échantillons de la sortie du BFN de communication
- d'envoyer les échantillons au sol.

**Fonction Gain VAA**

A partir des résultats de la fonction Mesure Puissance Voie Com, la fonction Gain VAA a pour but d'optimiser le gain, $G_x$, de la chaîne de numérisation de la sortie du BFN de communication de manière à exploiter au mieux la dynamique de codage du CAN sans saturer celui-ci. Plus précisément, ce gain est calculé à partir des résultats de Mesure Puissance Voie Com, $P_{sortie}$, du gain initial des chaînes de réception, $G_{init}$, et des caractéristiques du CAN (Gain du CAN $G_{can}$, Puissance maximale admissible en entrée avec la marge de 10 dB prise en compte $P_{max}$).

Si on considère que le gain de la chaîne de numérisation doit être nécessairement compris entre X et Y dB alors la fonction met en oeuvre les traitements suivants :

- Calcul de la puissance associée à l'entrée du CAN : $P_{entree} = P_{sortie}/G_{can}$
- Comparaison de $P_{entree}$ et $P_{max}$ : $\Delta P = P_{max} - P_{entree}$
- Calcul du gain de la chaîne de numérisation

  - Si $\Delta P \geq 0$, $G_x = \text{Inf}[G_{init} + \Delta P, Y \text{ dB}]$
  - Si $\Delta P < 0$, $G_x = \text{Sup}[G_{init} + \Delta P, X \text{ dB}]$

**Fonction Traitement VAA**

Pour le mode vérification par canal, la fonction Traitement VAA met en oeuvre les opérations décrites précédemment.

Pour le mode vérification par station, la fonction Traitement VAA met en oeuvre les opérations décrites précédemment.

**Revendications**

1. Procédé de vérification de l'antibrouillage dans un système de communications comportant plusieurs capteurs ou antennes adaptatives **caractérisé en ce qu'**il comporte au moins les étapes suivantes :

   • estimer la puissance moyenne $\hat{\pi}_y$ de la sortie du système de communication,
   • estimer les puissances respectives Pu ou P'u, d'une station u, du bruit antenne Pa ou P'a, du bruit thermique PT, ou P'T,
   • estimer au moins un des rapports suivants :

   $$J_{tot}/S_{tot} \;=\; \left( \sum_{p=1}^{P} P_p \right) / \left( \sum_{u=1}^{U} P_u \right)$$

   avec p = le brouilleur
   $J_{tot}/S_{tot}$ est égal à la somme des puissances des brouilleurs résiduels / somme des puissances des stations dans la bande de réception B.

   $$J_{tot}/S_u \;=\; \left( \sum_{p=1}^{P} P_p \right) / P_u$$

   $J_{tot}/S_u$ est égal à la somme des puissances des brouilleurs résiduels / puissance de la station u dans la bande de réception B.

   $$J_u/S_u \;=\; \left( \sum_{p=1}^{P} P_{pu} \right) / P_u$$

   avec Ppu = la puissance du brouilleur p dans la bande de réception Bu.

   • comparer au moins un des trois rapports à une valeur seuil.

2. Procédé de vérification de l'antibrouillage selon la revendication 1 **caractérisé en ce qu'**il comporte au moins une étape d'estimation de la puissance moyenne $\hat{\pi}_y$ pour une sortie à partir d'un nombre K d'échantillons, $y(k)$, $1 \leq k \leq$

*K de cette sortie,* donné par

$$\hat{\pi}_y \quad \triangleq \quad \frac{1}{K} \quad \sum_{k=1}^{K} \quad | \, y(k) \, |^2$$

3. Procédé de vérification de l'antibrouillage selon la revendication 1 **caractérisé en ce qu'**il comporte une étape d'estimation $\hat{P}_u$, $\hat{P'}_u$ de la puissance $P_u$, $P'_u$ en utilisant d'une part, la connaissance a priori des paramètres $w$ et $G_{num}$ pour une application numérique des filtres adaptatifs et $|\alpha|^2$, $w$ et $G$ pour une application analogique des filtres et d'autre part l'estimation des paramètres $\pi_u$ et $S_u$.

4. Procédé de vérification de l'antibrouillage selon la revendication 1 **caractérisé en ce qu'**il comporte une estimation $\hat{P}_a$, $\hat{P'}_a$ de la puissance $P_a$, $P'_a$ en utilisant d'une part, la connaissance a priori des paramètres $w$ et $G_{num}$ pour une application numérique des filtres adaptatifs et $|\alpha|^2$, $w$ et $G$ pour une application analogique de ces filtres et d'autre part l'estimation du paramètre $\eta_a$.

5. Procédé de vérification de l'antibrouillage selon la revendication 1 **caractérisé en ce qu'**il comporte une étape d'estimation $\hat{P}_T$, $\hat{P'}_T$ de la puissance $P_T$, $P'_T$ en utilisant la connaissance a priori des paramètres $w$ et $G_{num}$ pour une application numérique des filtres adaptatifs et $|\alpha|^2$ pour une application analogique des filtres et d'autre part l'estimation du paramètre $\eta_T$.

6. Procédé de vérification de l'antibrouillage selon l'une des revendications 1, 2, 3, 4 et 5 **caractérisé en ce qu'**il comporte une étape d'estimation $\hat{J}_{tot}/\hat{S}_{tot}$, du rapport $J_{tot}/S_{tot}$ donnée par

$$\hat{J}_{tot} / \hat{S}_{tot} \quad = \quad (\hat{\pi}_y \; - \; \sum_{u=1}^{U} \; \hat{P}_u \; - \; \hat{P}_a \; - \; \hat{P}_T \; ) \, / \, ( \sum_{u=1}^{U} \; \hat{P}_u \; )$$

7. Procédé de vérification de l'antibrouillage selon les revendications 1, 2, 3, 4 et 5 **caractérisé en ce qu'**il comporte une étape d'estimation $\hat{J}_{tot}/\hat{S}_u$, du rapport $J_{tot}/S_u$, donnée par

$$\hat{J}_{tot} / \hat{S}_u \quad = \quad (\hat{\pi}_y \; - \; \sum_{u=1}^{U} \; \hat{P}_u \; - \; \hat{P}_a \; - \; \hat{P}_T \; ) \, / \, \hat{P}_u$$

8. Procédé de vérification de l'antibrouillage selon les revendications 1, 2, 3, 4 et 5 **caractérisé en ce qu'**il comporte une étape d'estimation $\hat{J}/\hat{S}_u$, du rapport $J/S_u$ en utilisant la puissance totale de brouilleurs résiduels dans la bande $B_u$ de la station utile $u$ donnée par

$$\hat{J} / \hat{S}_u \quad = \quad (\hat{\pi}_{yu} \; - \; \hat{P}_u \; - \; \sum \; \hat{P}_{vu} \; - \; \hat{P}_{au} \; - \; \hat{P}_{Tu} \; ) \, / \, \hat{P}$$

9. Procédé de vérification de l'antibrouillage selon l'une des revendications 1 à 8 **caractérisé en ce qu'**il comporte une étape de détermination de la précision d'estimation et on utilise cette valeur pour fixer le seuil.

10. Système de vérification de l'antibrouillage dans un système de communications comportant plusieurs capteurs ou antennes adaptatives, une station au sol et un dispositif de pilotage **caractérisé en ce qu'**il comporte au moins les éléments suivants pour une vérification par canal, à partir du sol et pour une bande de réception B:

   un calculateur intégré dans la station sol et un calculateur embarqué, les deux calculateurs étant programmés pour exécuter les étapes du procédé selon la revendication 1:

   • estimer les puissances respectives Pu ou P'u, d'une station u, du bruit antenne Pa ou P'a, du bruit thermique PT, ou P'T,
• estimer au moins un des rapports suivants :

$$J_{tot}/S_{tot} \;=\; \left( \sum_{p=1}^{P} P_p \right) / \left( \sum_{u=1}^{U} P_u \right)$$

avec p = le brouilleur,
$J_{tot}/S_{tot}$ est égal à la somme des puissances des brouilleurs résiduels / somme des puissances des stations dans la bande de réception B.

$$J_{tot}/S_u \;=\; \left( \sum_{p=1}^{P} P_p \right) / P_u$$

$J_{tot}/S_u$ est égal à la somme correspondant à la somme des puissances des brouilleurs résiduels / puissance de la station u dans la bande de réception B.

11. Système de vérification de l'antibrouillage dans un système de communications comportant plusieurs capteurs ou antennes adaptatives, une station au sol et un dispositif de pilotage **caractérisé en ce qu'**il comporte au moins les éléments suivants pour une vérification par station:

un calculateur embarqué et un calculateur au sol, les calculateurs étant programmés pour exécuter les étapes du procédé selon la revendication 1:

• estimer les puissances respectives Pu ou P'u, d'une station u, du bruit antenne Pa ou P'a, du bruit thermique PT, ou P'T,
• déterminer la quantité relative à la bande de station u en tenant compte des P brouilleurs :

$$J_u/S_u \;=\; \left( \sum_{p=1}^{P} P_{pu} \right) / P_u$$

avec Ppu la puissance du brouilleur p dans la bande de réception Bu.

12. Utilisation du procédé selon l'une des revendications 1 à 9 ou du système selon l'une des revendications 10 et 11 à un système de communications spatiales.

**Patentansprüche**

1. Verfahren zum Überprüfen von Entstörung in einem Kommunikationssystem, das mehrere Sensoren oder adaptive Antennen umfasst, **dadurch gekennzeichnet, dass** es wenigstens die folgenden Schritte beinhaltet:

• Schätzen der mittleren Leistung $\hat{\pi}_y$ des Ausgangs des Kommunikationssystems;
• Schätzen der jeweiligen Leistungen Pu oder P'u, einer Station u, des Antennenrauschens Pa oder P'a, des thermischen Rauschens PT oder P'T;
• Schätzen von wenigstens einem der folgenden Verhältnisse:

$$J_{tot}/S_{tot} \;=\; \left( \sum_{p=1}^{P} P_p \right) / \left( \sum_{u=1}^{U} P_u \right)$$

wobei p = Störquelle,

$J_{tot}/S_{tot}$ gleich der Summe der Leistungen der Reststörquellen/Summe der Leistungen der Stationen im Empfangsband B ist,

$$J_{tot}/S_u \;=\; (\sum_{p=1}^{P} \boldsymbol{P}_p)/\boldsymbol{P}_u$$

$J_{tot}/S_u$ gleich der Summe der Leistungen der Reststörquellen/Leistung der Station u im Empfangsband B ist,

$$J_u/S_u \;=\; (\sum_{p=1}^{P} \boldsymbol{P}_{pu})/\boldsymbol{P}_u$$

wobei Ppu = Leistung der Störquelle p im Empfangsband Bu;

• Vergleichen von wenigstens einem der drei Verhältnisse mit einem Schwellenwert.

2. Verfahren zum Überprüfen von Entstörung nach Anspruch 1, **dadurch gekennzeichnet, dass** es wenigstens einen Schritt des Schätzens der mittleren Leistung $\hat{\pi}_y$ für einen Ausgang auf der Basis einer Anzahl $K$ von Samples, $y(k)$, $1 \le k \le K$ dieses Ausgangs beinhaltet, gegeben durch:

$$\hat{\pi}_y \;\triangleq\; \frac{1}{K}\sum_{k=1}^{K} |\,y(k)\,|^2$$

3. Verfahren zum Überprüfen von Entstörung nach Anspruch 1, **dadurch gekennzeichnet, dass** es einen Schritt des Schätzens von $\hat{P}_u$, $\hat{P}'_u$ der Leistung $\boldsymbol{P}_u$, $\boldsymbol{P}'_u$ unter Nutzung einerseits der Vorkenntnisse der Parameter $w$ und $G_{nwn}$ für eine digitale Anwendung der adaptiven Filter und $|\alpha|^2$, $\mathbf{w}$ und G für eine analoge Anwendung der Filter und andererseits des Schätzwertes der Parameter $\pi_u$ und $\mathbf{S}_u$ beinhaltet.

4. Verfahren zum Überprüfen von Entstörung nach Anspruch 1, **dadurch gekennzeichnet, dass** es das Schätzen von $\hat{P}_a$, $\hat{P}'_a$ der Leistung $\boldsymbol{P}_a$, $\boldsymbol{P}'_a$ unter Nutzung einerseits der Vorkenntnisse der Parameter $w$ und $G_{nwn}$ für eine digitale Anwendung der adaptiven Filter und $|\alpha|^2$, $\mathbf{w}$ und G für eine analoge Anwendung dieser Filter und andererseits des Schätzwertes des Parameters $\eta_a$ beinhaltet.

5. Verfahren zum Überprüfen von Entstörung nach Anspruch 1, **dadurch gekennzeichnet, dass** es einen Schritt des Schätzens $\hat{P}_T$, $\hat{P}'_T$ der Leistung $\boldsymbol{P}_T$, $\boldsymbol{P}'_T$ unter Nutzung einerseits der Vorkenntnisse der Parameter $\boldsymbol{w}$ und $G_{nwn}$ für eine digitale Anwendung der adaptiven Filter und $|\alpha|^2$ für eine analoge Anwendung der Filter und andererseits des Schätzwertes des Parameters $\eta_T$ beinhaltet.

6. Verfahren zum Überprüfen von Entstörung nach Anpruch 1, 2, 3, 4 oder 5, **dadurch gekennzeichnet, dass** einen Schritt des Schätzens von $\hat{J}_{tot}/\hat{S}_{tot}$, des Verhältnisses $J_{tot}/S_{tot}$ beinhaltet, gegeben durch:

$$\hat{J}_{tot}/\hat{S}_{tot} \;=\; (\hat{\pi}_y - \sum_{u=1}^{U} \hat{P}_u - \hat{P}_a - \hat{P}_T)\,/\,(\sum_{u=1}^{U} \hat{P}_u)$$

7. Verfahren zum Überprüfen von Entstörung nach den Ansprüchen 1, 2, 3, 4 und 5, **dadurch gekennzeichnet, dass** es einen Schritt des Schätzens von $\hat{J}_{tot}/\hat{S}_u$, des Verhältnisses $J_{tot}/S_u$ beinhaltet, gegeben durch:

$$\hat{J}_{tot}/\hat{S}_u \;=\; (\hat{\pi}_y - \sum_{u=1}^{U} \hat{P}_u - \hat{P}_a - \hat{P}_T)\,/\,\hat{P}_u$$

8.  Verfahren zum Überprüfen von Entstörung nach den Ansprüchen 1, 2, 3, 4 und 5, **dadurch gekennzeichnet, dass** es einen Schritt des Schätzens von $\hat{J}/\hat{S}_u$, des Verhältnisses $J/S_u$ unter Nutzung der Gesamtleistung von Reststörquellen in dem Band $B_u$ der nützlichen Station $u$ beinhaltet, gegeben durch:

$$\hat{J}/\hat{S}_u \;=\; (\hat{\pi}_{yu} \;-\; \hat{P}_u \;-\; \sum_{v \neq u} \hat{P}_{vu} \;-\; \hat{P}_{au} \;-\; \hat{P}_{Tu}\;)\,/\; \hat{P}$$

9.  Verfahren zum Überprüfen von Entstörung nach einem der Ansprüche 1 bis 8, **dadurch gekennzeichnet, dass** es einen Schritt des Feststellens der Schätzgenauigkeit beinhaltet, wobei dieser Wert zum Festlegen der Schwelle benutzt wird.

10. System zum Überprüfen von Entstörung in einem Kommunikationssystem, das mehrere Sensoren oder adaptive Antennen, eine Bodenstation und eine Steuervorrichtung umfasst, **dadurch gekennzeichnet, dass** es wenigstens die folgenden Elemente für eine Überprüfung pro Kanal vom Boden und für ein Referenzband B umfasst:

   einen in die Bodenstation integrierten Computer und einen Bordcomputer, wobei beide Computer zum Ausführen der Schritte des Verfahrens nach Anspruch 1 programmiert sind:

   • Schätzen der jeweiligen Leistungen Pu oder P'u, einer Station u, des Antennenrauschens Pa oder P'a, des thermischen Rauschens PT oder P'T;
   • Schätzen von wenigstens einem der folgenden Verhältnisse:

$$J_{tot}/S_{tot} \;=\; (\; \sum_{p=1}^{P} P_p \;) \,/\; (\; \sum_{u=1}^{U} P_u \;)$$

   wobei p = Störquelle,
   $J_{tot}/S_{tot}$ gleich der Summe der Leistungen der Reststörquellen/der Summe der Leistungen der Stationen im Empfangsband B ist,

$$J_{tot}/S_u \;=\; (\; \sum_{p=1}^{P} P_p \;)\,/\; P_u$$

   $J_{tot}/S_u$ gleich der Summe entsprechend der Summe der Leistungen der Reststörquellen/Leistung der Station u im Empfangsband B ist.

11. System zum Überprüfen von Entstörung in einem Kommunikationssystem, das mehrere Sensoren oder adaptive Antennen, eine Bodenstation und eine Steuervorrichtung umfasst, **dadurch gekennzeichnet, dass** es wenigstens die folgenden Elemente für eine Überprüfung pro Station umfasst:

   einen Bordcomputer und einen Bodencomputer,
   wobei die Computer zum Ausführen der Schritte des Verfahrens nach Anspruch 1 programmiert sind:

   • Schätzen der jeweiligen Leistungen Pu oder P'u, einer Station u, des Antennenrauschens Pa oder P'a, des thermischen Rauschens PT oder P'T;
   • Feststellen der Menge relativ zum Stationsband u unter Berücksichtigung der P Störquellen:

$$J_u/S_u \;=\; (\; \sum_{p=1}^{P} P_{pu} \;)\,/\; P_u$$

   wobei Ppu die Leistung der Störquelle p im Empfangsband Bu ist.

**12.** Anwenden des Verfahrens nach einem der Ansprüche 1 bis 9 oder des Systems nach einem der Ansprüche 10 und 11 in einem Weltraumkommunikationssystem.

**Claims**

**1.** A method for verifying anti-jamming in a communication system comprising a plurality of sensors or adaptive antennae, **characterised in that** it comprises at least the following steps:

- estimating the mean power $\hat{\pi}_y$ of the output of said communication system;
- estimating the respective powers Pu or P'u of a station u, the antenna noise Pa or P'a, the thermal noise PT or P'T;
- estimating at least one of the following ratios:

$$J_{tot}/S_{tot} \;=\; ( \sum_{p=1}^{P} \boldsymbol{P}_p )\,/\,( \sum_{u=1}^{U} \boldsymbol{P}_u )$$

with p = the jammer,
$J_{tot}/S_{tot}$ being equal to the sum of the powers of the residual jammers/sum of the powers of the stations in the reception band B,

$$J_{tot}/S_u \;=\; ( \sum_{p=1}^{P} \boldsymbol{P}_p )\,/\,\boldsymbol{P}_u$$

$J_{tot}/S_u$ being equal to the sum of the powers of the residual jammers/power of the station u in the reception band B,

$$J_u/S_u \;=\; ( \sum_{p=1}^{P} \boldsymbol{P}_{pu} )\,/\,\boldsymbol{P}_u$$

with Ppu = the power of the jammer p in the reception band Bu;

- comparing at least one of the three ratios to a threshold value.

**2.** The method for verifying anti-jamming according to claim 1, **characterised in that** it comprises at least one step of estimating the mean power $\hat{\pi}_y$ for an output on the basis of a number $K$ of samples, $y(k)$, $1 \le k \le K$ of said output, provided by:

$$\hat{\pi}_y \;\triangleq\; \frac{1}{K} \sum_{k=1}^{K} |\,y(k)\,|^2$$

**3.** The method for verifying anti-jamming according to claim 1, **characterised in that** it comprises a step of estimating $\hat{P}_u$, $\hat{P}'_u$ from the power $\boldsymbol{P}_u$, $\boldsymbol{P}'_u$ by using, on the one hand, the a priori knowledge of the parameters $\boldsymbol{w}$ and $G_{nwn}$ for a digital application of the adaptive filters and $|\alpha|^2$, $\boldsymbol{w}$ and $G$ for an analogue application of said filters and, on the other hand, the estimation of the parameters $\pi_u$ and $\boldsymbol{S}_u$.

**4.** The method for verifying anti-jamming according to claim 1, **characterised in that** it comprises estimating $\hat{P}_a$, $\hat{P}'_a$ from the power $\boldsymbol{P}_a$, $\boldsymbol{P}'_a$ by using, on the one hand, the a priori knowledge of the parameters $\boldsymbol{w}$ and $G_{nwn}$ for a digital application of the adaptive filters and $|\alpha|^2$, $\boldsymbol{w}$ and $G$ for an analogue application of said filters and, on the other hand, the estimation of the parameter $\eta_a$.

**5.** The method for verifying anti-jamming according to claim 1, **characterised in that** it comprises a step of estimating $\hat{P}_T$, $\hat{P}'_T$ from the power $P_T$, $P'_T$ by using, on the one hand, the a priori knowledge of the parameters $w$ and $G_{nwn}$ for a digital application of the adaptive filters and $|\alpha|^2$ for an analogue application of said filters and, on the other hand, the estimation of the parameter $\eta_T$.

**6.** The method for verifying anti-jamming according to claims 1, 2, 3, 4 and 5, **characterised in that** it comprises a step of estimating $\hat{J}_{tot}/\hat{S}_{tot}$, from the ratio $J_{tot}/S_{tot}$ provided by:

$$\hat{J}_{tot} / \hat{S}_{tot} = (\hat{\pi}_y - \sum_{u=1}^{U} \hat{P}_u - \hat{P}_a - \hat{P}_T) / (\sum_{u=1}^{U} \hat{P}_u)$$

**7.** The method for verifying anti-jamming according to claims 1, 2, 3, 4 and 5, **characterised in that** it comprises a step of estimating $\hat{J}_{tot}/\hat{S}_u$, from the ratio $J_{tot}/S_u$ provided by:

$$\hat{J}_{tot} / \hat{S}_u = (\hat{\pi}_y - \sum_{u=1}^{U} \hat{P}_u - \hat{P}_a - \hat{P}_T) / \hat{P}_u$$

**8.** The method for verifying anti-jamming according to claims 1, 2, 3, 4 and 5, **characterised in that** it comprises a step of estimating $\hat{J}/\hat{S}_u$, from the ratio $J/S_u$ by using the total power of residual jammers in the band $B_u$ of the useful station $u$ provided by:

$$\hat{J} / \hat{S}_u = (\hat{\pi}_{yu} - \hat{P}_u - \sum_{v \neq u} \hat{P}_{vu} - \hat{P}_{au} - \hat{P}_{Tu}) / \hat{P}$$

**9.** The method for verifying anti-jamming according to any one of claims 1 to 8, **characterised in that** it comprises a step of determining the estimation accuracy and this value being used to determine the threshold.

**10.** A system for verifying anti-jamming in a communication system comprising a plurality of sensors or adaptive antennae, a ground station and a control device, **characterised in that** it comprises at least the following elements for one verification per channel, from the ground and for a reception band B:

a computer incorporated in said ground station and an on-board computer, both computers being programmed to execute the steps of the method according to claim 1:

• estimating the respective powers Pu or P'u of a station u, the antenna noise Pa or P'a, the thermal noise PT or P'T;
• estimating at least one of the following ratios:

$$J_{tot}/S_{tot} = (\sum_{p=1}^{P} P_p) / (\sum_{u=1}^{U} P_u)$$

with p = the jammer,
$J_{tot}/S_{tot}$ being equal to the sum of the powers of the residual jammers/sum of the powers of the stations in the reception band B,

$$J_{tot}/S_u = (\sum_{p=1}^{P} P_p) / P_u$$

$J_{tot}/S_u$ being equal to the sum corresponding to the sum of the powers of the residual jammers/power of the station u in the reception band B.

11. A system for verifying anti-jamming in a communication system comprising a plurality of sensors or adaptive antennae, a ground station and a control device, **characterised in that** it comprises at least the following elements for one verification per station:

an on-board computer and a ground computer,

said computers being programmed to execute the steps of the method according to claim 1:

• estimating the respective powers Pu or P'u of a station u, the antenna noise Pa or P'a, the thermal noise PT or P'T;
• determining the quantity relative to the station band u by taking into account the P jammers:

$$J_u / S_u \ = \ ( \sum_{p=1}^{P} P_{pu} ) / \ P_u$$

with Ppu being the power of the jammer p in the reception band Bu.

12. The use of the method according to any one of claims 1 to 9 or of the system according to any one of claims 10 to 11 in a space communication system.

**FIG.1**

**FIG.2**

Quadrature Hybride

Déphaseur + Atténuateur
variable

Π / 2

wi

wq

+

φ

w

**FIG.3**

Réseau de capteurs
satellite

Θ3 dB

X  X
X    X
X   X

Couverture

Stations
utiles

**FIG.4**

Bruit
externe

*P*1

Chaîne Numérisation

*P*2

Utiles

Chaîne Numérisation

Σ

*P*3

*y*(*n*)

Brouilleurs

Chaîne Numérisation

*x*(*t*)

$G_{NUM}$

*w*

**FIG.5**

Bruit
externe

*P*1

Chaîne RF

*P*2

Utiles

Chaîne RF

Σ

*P*3

Chaîne Num

Brouilleurs

Chaîne RF

*x*(*t*)

*G*

*w*

α

*y*(*n*)

**FIG.6**

**FIG.7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MATSUMOTO Y et al.** Interference suppression by adaptative beamforming of satellite-borne phased array antennas. *electronics and communications in Japan -Part I communications, scripta technica,* 01 Novembre 1998, vol. 81 (11), ISSN 8756-6621, 58-66